Europäisches Patentamt

European Patent Office

Office européen des brevets

(11) Veröffentlichungsnummer: **0 171 066**
**A2**

## EUROPÄISCHE PATENTANMELDUNG

(21) Anmeldenummer: **85109887.1**

(22) Anmeldetag: **06.08.85**

(51) Int. Cl.4: **G06F 13/00** , **H04Q 9/14**

(30) Priorität: **09.08.84 DE 3429406**

(43) Veröffentlichungstag der Anmeldung:
**12.02.86 Patentblatt 86/07**

(84) Benannte Vertragsstaaten:
**AT CH DE LI NL SE**

(71) Anmelder: **Siemens Aktiengesellschaft**
**Berlin und München Wittelsbacherplatz 2**
**D-8000 München 2(DE)**

(72) Erfinder: **Haberer, Herbert, Dipl.-Ing. (FH)**
**Eberwurzstrasse 87**
**D-8000 München 45(DE)**
Erfinder: **Singer, Johannes, Dipl.-Ing.**
**Oberfeldstrasse 12**
**D-8034 Germering(DE)**

(54) Verfahren und Schaltungsanordnung zum Adressieren von Signalabgabe-/Signalaufnahmeeinrichtungen von einer zentralen Verarbeitungseinrichtung her.

(57) Zum Adressieren von Signalabgabe-/Signalaufnahmeeinrichtungen (As) von einer zentralen Verarbeitungseinrichtung (Zs) her, zwischen der und den Signalabgabe-/Signalaufnahmeeinrichtungen (As) jeweils eine vorgegebene Anzahl von Bits umfassende binäre Signalisierungsinformationen übertragen werden, dienen jeweils die vorgegebene Anzahl von Bits umfassende Signalisierungsinformationen und zumindest eine abwechselnd damit auftretende festgelegte Bitkombination.

Verfahren und Schaltungsanordnung zum Adressieren von Signalabgbe-/Signalaufnahmeeinrichtungen von einer zentralen Verarbeitungseinrichtung her.

Die Erfindung bezieht sich auf ein Verfahren und eine Schaltungsanordnung zum Adressieren von Signalabgabe-/Signalaufnahmeeinrichtungen von einer zentralen Verarbeitungseinrichtung her, zwischen der und den betreffenden Signalabgabe-/Signalaufnahmeeinrichtungen jeweils eine vorgegebene Anzahl von Bits umfassende binäre Signalisierungsinformationen übertragen werden.

Ein Verfahren und eine Schaltungsanordnung der vorstehend bezeichneten Art sind im Zusammenhang mit Mikroprozessoren enthaltenden Steuereinrichtungen generell bereits bekannt ("Peripheral Design Handbook", Intel, April 1978, insbesondere Seite 2-74). Bei diesen bekannten Verfahren und Schaltungsanordnungen erfolgt die Adressierung der einzelnen Signalabgabe-/Signalaufnahmeeinrichtungen über gesonderte Adressierungsleitungen, die neben für eine Datensignalübertragung zur Verfügung stehenden Datensignalleitungen vorhanden sind. Dies bedeutet einen zuweilen nicht unerheblichen schaltungstech-nischen Aufwand. Es ist zwar prinzipiell möglich, ein und dieselben Übertragungsleitungen sowohl für die Übertragung von Adressensignalen als auch für die Übertragung von Datensignalen auszunutzen. In diesen Fällen muß jedoch sichergestellt werden, daß die Einrichtung, der die jeweiligen Signale zugeführt.werden, diese eindeutig nach Adressensignalen und Datensignalen unterscheiden kann. Wenn kein gesonderter schaltungstech nischer Aufwand getrieben wird, bedeutet dies, daß für die Adressierung benutzte Signale nicht als Datensignale übertragen werden dürfen.

Der Erfindung liegt nun die Aufgabe zugrunde, einen Weg zu zeigen, wie unter Vermeidung der vorstehend aufgezeigten Nachteile vorzugehen ist, um die für die Adressierung der Signalabgabe-/Signalaufnahmeeinrichtungen benutzten Signalkombinationen auch im Zusammenhang mit der Übertragung von Datensignalen benutzen zu können.

Gelöst wird die vorstehend aufgezeigte Aufgabe bei einem Verfahren der eingangs genannten Art erfindungsgemäß dadurch, daß die einzelnen Signalabgabe-/Signalaufnahmeeinrichtungen von der zentralen Verarbeitungseinrichtung her mit Hilfe von durch jeweils die vorgegebene Anzahl von Bits umfassende Signalisierungsinformationen und zumindest eine abwechselnd damit auftretende festgelegte Bitkombination gebildeten Adressen für eine Verbindung mit der betreffenden zentralen Verarbeitungseinrichtung adressiert werden.

Die Erfindung bringt den Vorteil mit sich, daß mit einem relativ geringen Aufwand sichergestellt ist, daß die für Signalisierungszwecke benutzten Bitkombinationen zusätzlich auch in den für die Datensignalübertragung benutzten Signalen verwendet werden können, ohne daß es zu einer fehlerhaften Betriebsweise kommt.

Vorzugsweise werden für die jeweilige festgelegte Bitkombination bestimmte Bits in der genannten vorgegebenen Anzahl abgeben. Dies bringt den Vorteil mit sich, daß die Auswertung de: den einzelnen Signalabgabe-/Signalaufnahmeeinrichtungen zugeführten Signale besonders einfach möglich ist.

Zweckmäßigerweise werden zwei voneinander durch wenigstens ein Bit sich unterscheidende Bitkombinationen bereitgestellt, bei deren abwechselnd mit jeweils einer die genannte vorgegebene Anzahl von Bits umfassenden Signalisierungsinformation erfolgender jeweiliger Übertragung die jeweils adressierte Signalabgabe-/Signalaufnahmeeinrichtung zur Signalabgabe oder zur Signalaufnahme veranlaßt wird. Hierdurch ergibt sich der Vorteil, daß auf besonders einfache Weise eine gezielte Funktionssteuerung in der jeweiligen Signalabgabe-/Signalaufnahmeeinrichtung möglich ist.

In der zentralen Verarbeitungseinrichtung wird vorzugsweise erst eine festgelegte Zeitspanne nach der Adressierung der jeweiligen Signalabgabe-/Signalaufnahmeeinrichtung mit der Signalaufnahme bzw. Signalabgabe begonnen. Durch diese Maßnahme ist in vorteilhafter Weise sichergestellt, daß eine störungsfreie Signalübertragung zwischen den jeweils betroffenen Einrichtungen möglich ist.

Zur Durchführung des Verfahrens gemäß der Erfindung dient vorzugsweise eine Schaltungsanordnung mit einer zentralen Verarbeitungseinrichtung und einer Mehrzahl von Signalabgabe-/Signalaufnahmeeinrichtungen, die einzeln mit der zentralen Verarbeitungseinrichtung verbindbar sind. Diese Schaltungsanordnung ist erfindungsgemäß dadurch gekennzeichnet, daß die zentrale Verarbeitungseinrichtung einen Adressengeber aufweist, der als die einzelnen Signalabgabe-/Signalaufnahmeeinrichtungen bezeichnende Adressen jeweils eine bestimmte Anzahl von Bits umfassende Signalisierungsinformationen und eine festgelegte Bitkombination abwechselnd miteinander abgibt, und daß in einer die Signalabgabe-/Signalaufnahmeeinrichtungen mit der zentralen Verarbeitungseinrichtung verbindenden Verbindungseinrichtung eine Bewertungsschaltung vorhanden ist, welche die ihr zugeführten Signalisierungsinformatinen lediglich in dem Fall als Adressen zur Adressierung der jeweiligen Signalabgabe-/Signalaufnahmeeinrichtung auswertet, daß die betreffenden Signalisierungsinformationen abwechselnd mit der festgelegten Bitkombination auftreten. Hierdurch ergibt sich der Vorteil eines besonders geringen schaltungstechnischen Aufwands für die Adressierung der einzelnen Signalabgabe-/Signalaufnahmeeinrichtungen.

Anhand einer Zeichnung wird die Erfindung nachstehend beispielsweise näher erläutert.

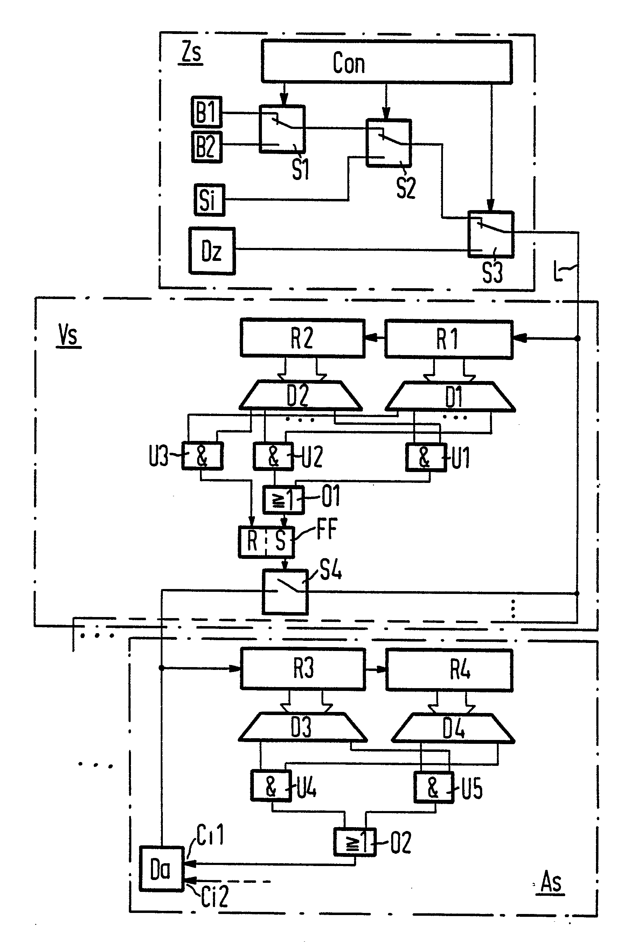

In der Zeichnung ist eine Schaltungsanordnung dargestellt, die in ihrem oberen Teil eine auch als Zenntralstation zu bezeichnende zentrale Verarbeitungseinrichtung Zs aufweist, welche über eine Übertragungsleitung L an einer als Vermittlungseinrichtung wirkenden Verbindungseinrichtung Vs angeschlossen ist. An dieser Vermittlungseinrichtung Vs ist eine Vielzahl von als Außenstationen zu bezeichnenden Signalabgabe-/Signalaufnahmeeinrichtungen angeschlossen, deren eine mit As im unteren Teil der Zeichnung angedeutet ist.

Die Zentralstation Zs weist einen Adressengeber auf, zu dem im vorliegenden Fall eine Signalisierungsinformationsquelle Si und zwei unterschiedliche Bitkombinationen abgebende Bitkombinationsquellen B1, B2 gehören. Die beiden Bitkombinationsquellen - deren abgegebene Bitkombinationen sich um zumindest eine Bitstelle voneinander unterscheiden - sind ausgangsseitig an den Eingängen eines Umschalters S1 angeschlossen, der mit einen Eingangsseite eines weiteren Umschalters S2 verbunden ist. Dieser weitere Umschalter S2 ist mit seiner anderen Eingangsseite am Ausgang der Signalisierungsinformationsquelle Si angeschlossen. Der Ausgang des Umschalters S2 ist mit der einen Eingangsseite eines noch weiteren Umschalters S3 angeschlossen, an dessen anderen Eingang eine Datenaufnahme-/Datenabgabeeinrichtung Dz mit ihrer Eingangs-bzw. Ausgangsseite angeschlossen ist. Die Schalterstellungen der drei Umschalter S1, S2, S3 werden von einer Steuereinrichtung Con her gesteuert, worauf weiter unten nich näher eingegangen werden wird. An dieser Stelle sei jedoch angemerkt, daß im vorliegenden Fall von bzw. zu der Zentralstation Zs Signale - und zwar sowohl Adressierungssignale als auch Signalisierungsinformationssignale bzw. Datensignale - jeweils seriell übertragen werden.

Die Vermittlungseinrichtung Vs weist eingangsseitig zwei hintereinander geschaltete Schieberegister R1 und R2 auf. Diesen Schieberegistern ist jeweils ein Decoder D1 bzw. D2 nachgeschaltet, der die in dem jeweiligen Schieberegister enthaltenen Signalbits auszuwerten gestattet. An bestimmten Ausgängen der beiden Decoder D1, D2 sind UND-Glieder U1, U2 mit ihren Eingängen angeschlossen. Bei den betreffenden Ausgängen der Decoder D1, D2 handelt es sich um solche Ausgänge, die jeweils dann ein "1"-Binärsignal führen, wenn in dem zugehörigen Schieberegister R1 bzw. R2 gerade eine bestimmte Bitkombination vorhanden ist. Die beiden UND-Glieder U1, U2 sind ausgangsseitig über ein ODER-Glied mit dem Setzeingang eines bistabilen Kippgliedes FF verbunden, welches mit seinem im Setzzustand ein "1"-Binärsignal führenden Ausgang mit dem Betätigungseingang eines Schalters S4 verbunden ist. Dieser Schalter verbindet den Eingang und einen Ausgang der Vermittlungseinrichtung Vs. Wenn der Schalter S4 auf seine Betätigung hin geschlossen ist, dann gelangen die über die Übertragungsleitung L der Vermittlungseinrichtung Vs zugeführten Signale zu dem mit dem betreffenden Schalter S4 verbundenen Ausgang dieser Vermittlungseinrichtung hin.

Bezüglich des bistabilen Kippgliedes FF sei noch erwähnt, daß dieses mit seinem Rücksetzeingang am Ausgang eines UND-Gliedes U3 angeschlossen ist, welches eingangsseitig an Ausgängen der beiden Decoder D1, D2 angeschlossen ist.

Den vorstehend erläuterten Schaltungselementen, umfassend die UND-Glieder U1, U2, U3, das ODER-Glied 01, das Kippglied FF und den Schalter S4, entsprechende Schaltungselements sind in einer der Anzahl herzustellender Verbindungen entsprechenden Vielzahl vorgesehen. Die betreffenden UND-Glieder sind dabei an unterschiedlichen Ausgängen der beiden Decoder D1, D2 angeschlossen, was weiter unten noch näher ersichtlich werden wird.

Die im unteren Teil der Zeichnung dargestellte Außenstation As weist eingangsseitig zwei hintereinander geschaltete Schieberegister R3, R4 auf, mit deren Ausgängen zwei Decoder D3 bzw. D4 verbunden sind. Mit den Ausgängen der beiden Decoder D3, D4 sind die Eingänge von UND-Gliedern U4, U5 verbunden, die ausgangsseitig über ein ODER-Glied 02 mit einem Steuereingang Cil einer Datenabgabe-/Datenaufnahmeeinrichtung Da verbunden ist. Diese Datenabgabe-/Datenaufnahmeeinrichtung Da ist mit einem Datenabgabeausgang/Datenaufnahmeeingang mit der Leitung verbunden, an der das der betreffenden Außenstation As zugehörige Schieberegister R3 eingangsseitig angeschlossen ist. Die betreffende Datenabgabe-/Datenaufnahmeeinrichtung Da kann gegebenenfalls noch einen weiteren Steuereingang Ci2 aufweisen, derüber eine entsprechende Verknüpfungsanordnung angesteuert wird wie der Steuereingang Ci1. Durch die Steuerung jeweils eines dieser beiden Steuereingänge Ci1, Ci2 ist es dann möglich, die betreffende Datenabgabe-/Datenaufnahmeeinrichtung Da gezielt entweder zur Datenabgabe oder zur Datenaufnahme wirksam zu steuern.

Nachdem zuvor der Aufbau der in der Zeichnung dargestellten Schaltungsanordnung erläutert worden ist, sei nunmehr die Arbeitsweise dieser Schaltungsanordnung betrachtet. Zunächst sei angemerkt, daß die in der Zeichnung angedeuteten Schieberegister R1, R2, R3, R4 alle gleich groß sind; sie enthalten jeweils beispielsweise 8 Registerstufen. Die Signalisierungsinformationsquelle Si sowie die Bitskombinationsquellen B1, B2 mögen so ausgelegt sein, daß sie ebenfalls jeweils Signale mit einer solchen Anzahl von Bits abgeben, die gleich der Anzahl der Schieberegisterstufen jedes der erähnten Schieberegister ist. Die betreffenden Signalquellen Si, B1, B2 geben im vorliegenden Fall jeweils 8 Bits umfassende Signale ab.

Um die jeweilige mit der Zentralstation Zs zu verbindende Signalabgabe-/Signalaufnahmeeinrichtung bzw. Außenstation As zu adressieren, werden von der Zentralstation Zs abwechselnd miteinander die Signalisierungsinformation von der Signalisierungsinformationsquelle Si und die Bitkombination einer der Bitkombinationsquellen B1, B2 abgegeben. Dazu steuert die Steuereinrichtung Con der Zentralstation Zs den Umschalter S1 in seine eine Schalterstellung, während der Umschalter S2 nach Abgabe jeweils eines Signals - entweder von der einen Bitkombinationsquelle B1 oder B2 oder von der Signalisierungsinformationsquelle Si - umgesteuert wird, um anschließend von der anderen Signalquelle eine entsprechende Bitkombination weiterzuleiten. Der Umschalter S3 befindet sich dabei in seiner in der Zeichnung dargestellten Schalterstellung.

Damit gelangen die betreffenden Bitkombinationen über die Übertragungsleitung L in die Schieberegister R1, R2 der Vermittlungseinrichtung Vs hinein. Die mit diesen Schieberegistern verbundenen Decoder D1, D2 geben an ihren mit den Eingängen der UND-Glieder U1, U2 verbundenen Ausgängen jeweils dann ein "1"-Binärsignal ab, wenn die in den beiden Schieberegistern R1 und R2 enthaltenen Bitkombinationen als Adresse auszuwerten sind. Aus diesem Grunde sind die beiden UND-Glieder U1, U2 eingangsseitig jeweils an einem Ausgang beider Decoder D1 und D2 angeschlossen. Dadurch ist es dann möglich, die der Vermittlungseinrichtung Vs zugeführten Signalisierungsinformations- und Bitkombinationssignale unabhängig von ihrer Reihenfolge als Adresse auszuwerten. Es dürfte einzusehen sein, daß in dem Fall, daß lediglich eine fest vorgegebene Reihenfolge dieser Signale als Adresse zu werten ist, mit nur einem der UND-Glieder U1, U2 ausgekommen werden kann.

Wenn - wie zuvor angenommen - die Vermittlungseinrichtung Vs die ihren Schieberegistern R1, R2 zugeführten Signale als Adresse erkannt hat, dann wird das bistabile Kippglied FF in seinen Setzzustand gesteuert, in welchem der Schalter S4 geschlossen wird. Das betreffende bistabile Kippglied FF wird erst dann wieder in seinen Rücksetzzustand zurückgesteuert -in welchem dann der Schalter S4 wieder geöffnet ist - wenn dem UND-Glied U3 von entsprechenden Ausgängen der Decoder D1, D2 "1"-Binärsignale zugeführt werden. Dies ist dann der Fall, wenn von der Zentralstation Zs entsprechende Verbindungsauslösesignale abgegeben werden, wozu beispielsweise von der Signalisierungsinformationsquelle Si bereitgestellte besondere Signale herangezogen werden können.

Über den annahmegemäß nunmehr geschlossenen Schalter S4 der Vermittlungseinrichtung Vs ist die Zentralstation Zs direkt mit der Außenstation As verbunden. Um die in dieser Außenstation As enthaltene Datenabgabe-/Datenaufnahmeeinrichtung Da für eine Datenabgabe und für eine Datenaufnahme wirksam zu steuern, gibt im vorliegenden Fall die Zentralstation Zs noch zwei weitere Signale ab. Diese Signale können aus einem von der Signalisierungsinformationsquelle Si abgegebenen Signal und aus einem Bitkombinationssignal einer der beiden Bitkombinationsquellen B1, B2 bestehen. Die betreffenden Signale werden nach Aufnahme in den Schieberegistern R3, R4 von den zugehörigen Decodern D3, D4 decodiert. Wenn die Decoder D3, D4 an ihren mit den Eingängen des UND-Gliedes U3 oder des UND-Gliedes U4 verbundenen Ausgängen jeweils ein "1"-Binärsignal abgeben, wird im vorliegenden Fall die Datenabgabe-/Datenaufnahmeeinrichtung Da an ihrem Steuereingng Cil ein "1"-Binärsignal als Steuersignal zugeführt erhalten. Dadurch kann die betreffende Einrichtung Da beispielsweise für den Datenabgabetrieb wirksam gesteuert werden. Wie oben erwähnt, kann eine Ansteuerung an dem anderen Steuereingang Ci2 über eine entsprechende Verknüpfungsanordnung in dem Fall erfolgen, daß der Datenaufnahmebetrieb der betreffenden Einrichtung Da wirksam gesteuert wird. An dieser Stelle sei jedoch angemerkt, daß prinzipiell auch ohne eine spezielle Ansteuerung der Datenabgabe-/Datnaufnahmeeinrichtung Da in der Außenstation As ausgekommen werden kann, um Datenabgabe- bzw. Datenaufnahmeprozeduren abzuwickeln. So ist es ohne weiteres denkbar, daß die Zentralstation Zs -nachdem die gewünschte Verbindung zu der Außenstation As hergestellt worden ist - über den umgesteuerten Umschalter S3 von ihrer Datenaufnahme-/Datenabgabeeinrichtung Dz entsprechende Steuersignale abgibt, welche in der Datenabgabe-/Datenaufnahmeeinrichtung Da die gewünschten Einstellvorgänge bewirken. In diesem Falle ist die im unteren Teil der Zeichnung dargestellte Schaltungsanordnung, umfassend die Schieberegister R3, R4, die Decoder D3, D4 und die Verknüpfungsglieder U4, U5 and 02 entbehrlich.

Zuvor ist erläutert worden, wie von der Zentralstation Zs her eine Adressierung und damit Verbindung zu der Außenstation As hin erfolgen kann. Als Adresse zur Adressierung der Außenstation As ist dabei eine Signalisierungsinformation zusammen mit einer vorgegebenen Bitkombination ausgenutzt worden. Die betreffende Bitkombination kann beispielsweise lediglich binäre Einsen umfassen. Dadurch ist die Verwendung der die betreffende Adresse bildenden Bitfolge, wie sie in der erwähnten Signalisierungsinformation enthalten ist, für eine gesonderte Übertragung als entsprechende Signalisierungsinformation nicht ausgeschlossen. In diesem Falle würde nämlich die betreffende Signalisierungsinformation - da eine entsprechende Bitkombination in wechselnder Folge mit ihr fehlt - nicht als zu einer Adresse gehörig ausgewertet werden.

Vorstehend ist die vorliegende Erfindung unter Bezugnahme auf die in der Zeichnung veranschaulichten Einrichtungen erläutert worden. Es dürfte jedoch einzusehen sein, daß die Zentralstation und die jeweilige Außenstation sowie die Vermittlungseinrichtung auch anders aufgebaut sein können, als dies oben beschrieben worden ist. So kann die Vermittlungseinrichtung Vs beispielsweise eine Einrichtung sein, die als Synchronknoten SK12 bekannt ist (siehe Zeitschrift "NTZ, Bd 35 (1982) Heft 2, Seiten 78 bis 82). Die Zentralstation Zs kann in diesem Fall durch eine zentrale Datenverarbeitungsanlage gebildet sein, und die einzelnen Auzßenstationen können durch Datenstationen gebildet sein.

**Ansprüche**

1. Verfahren zum Adressieren von Signalabgabe-/Signalaufnahmeeinrichtungen (As) von einer zentralen Verarbeitungseinrichtung (Zs) her, zwischen der und den betreffenden Signalabgabe-/Signalaufnahmeeinrichtungen (As) jeweils eine vorgegebene Anzahl von Bits umfassende binäre Signalisierungsinformationen und Datensignale übertragen werden, **dadurch gekennzeichnet,**daß die einzelnen Signalabgabe-/Signalaufnahmeeinrichtungen (As) von der zentralen Verarbeitungseinrichtung (Zs) mit Hilfe von durch jeweils die vorgegebene Anzahl von Bits umfassende Signalisierungsinformationen und zumindest eine abwechselnd damit auftretende festgelegte Bitkombination gebildeten Adressen für eine Verbindung mit der betreffenden zentralen Verarbeitungseinrichtung (Zs) adressiert werden.

2. Verfahren nach Anspruch 1, **dadurch gekennzeichnet,**daß als jeweilige genannte festgelegte Bitkombination bestimmte Bits in der genannte vorgegebenen Anzahl abgegeben werden.

3. Verfahren nach Anspruch 1 oder 2, **dadurch gekennzeichnet,**daß zwei voneinander durch wenigstens ein Bit sich unterscheidende Bitkombinationen bereitgestellt werden, bei deren abwechselnd mit jeweils einer die genannte vorgegebene Anzahl von Bits umfassenden Signalisierungsinformation erfolgender jeweiliger Übertragung die jeweils adressierte Signalabgabe-/Signalaufnahmeeinrichtung (As) zur Signalabgabe oder zur Signalaufnahme veranlaßt wird.

4. Verfahren nach einem der Ansprüche 1 bis 3, **dadurch gekennzeichnet,**daß in der zentralen Verarbeitungseinrichtung (Zs) erst eine festgelegte Zeitspanne nach der Adressierung der jeweiligen Signalabgabe-/Signalaufnahmeeinrichtung (As) mit der Signalaufnahme bzw. Signalabgabe begonnen wird.

5. Schaltungsanordnung zur Durchführung des Verfahrens nach Anspruch 1, mit einer zentralen Verarbeitungseinrichtung (Zs) und einer Mehrzahl von Signalabgabe-/Signalaufnahmeeinrichtungen (As), die einzeln mit der zentralen Vearbeitungseinrichtung (Zs) verbindbar sind, **dadurch gekennzeichnet,.** daß die zentrale Verarbeitungseinrichtung (Zs) einen Adressengeber (Si, B1, B2) aufweist, der als die einzelnen Signalabgabe-/Signalaufnahmeeinrichtungen (As) bezeichnende Adressen eine jeweils eine bestimmte Anzahl von Bits umfassende Signalisierungsinformation und eine festgelegte Bitkombination abwechselnd miteinander abgibt, und daß in einer die Signalabgabe-/Signalaufnahmeeinrichtungen (As) mit der zentralen Verarbeitungseinrichtung (Zs) verbindenden Verbindungseinrichtung (Vs) eine Bewertungsschaltung (R1, R2, D1, D2, U1, U2, 01, FF, S4) vorhanden ist, welche ihr zugeführten Signalisierungsinformationen lediglich in dem Fall als zu Adressen gehörig und damit zur Adressierung der jeweiligen Signalabgabe-/Signalaufnahmeeinrichtung (As) dienend auswertet, daß die betreffenden Signalisierungsinformationen abwechselnd mit der festgelegten Bitkombination auftreten.

0 171 066